Europäisches Patentamt

European Patent Office

Office européen des brevets

(19)

(11) Numéro de publication : **0 185 585**

**B1**

(12) **FASCICULE DE BREVET EUROPÉEN**

(45) Date de publication du fascicule du brevet :
02.11.89

(51) Int. Cl.⁴ : **G 01 S 7/28**, G 01 S 13/26

(21) Numéro de dépôt : 85402396.7

(22) Date de dépôt : 03.12.85

(54) **Dispositif d'élimination de bruit basse fréquence d'un système de transmission, en particulier de bruit en l/f dans un récepteur radar homodyne.**

(30) Priorité : 06.12.84 FR 8418642

(43) Date de publication de la demande :
25.06.86 Bulletin 86/26

(45) Mention de la délivrance du brevet :
02.11.89 Bulletin 89/44

(84) Etats contractants désignés :
DE GB IT NL SE

(56) Documents cités :
GB--A-- 1 587 357
US--A-- 3 332 077
NASA TECHBRIEF, no. NTN83-0333, 1983, Lyndon B.
Johnson Space Center, Houston, Texas, US; "Pulsed
phase shifter improves doppler radar"

(73) Titulaire : **LMT RADIO PROFESSIONNELLE**
**46-47, Quai Alphonse Le Gallo**
**F-92103 Boulogne-Billancourt (FR)**

(72) Inventeur : **Poullain, Michel**
**THOMSON-CSF SCPI 173, bld Haussmann**
**F-75379 Paris Cedex 08 (FR)**
Inventeur : **Marcuard, Alain**
**THOMSON-CSF SCPI 173, bld Haussmann**
**F-75379 Paris Cedex 08 (FR)**

(74) Mandataire : **Chaverneff, Vladimir et al**
**THOMSON-CSF SCPI**
**F-92045 PARIS LA DEFENSE CEDEX 67 (FR)**

## Description

La présente invention se rapporte à un dispositif d'élimination de bruit basse fréquence d'un système de transmission, en particulier de bruit en 1/f dans un récepteur radar homodyne.

Dans un récepteur homodyne, le changement de fréquence restitue la bande de base, c'est-à-dire que la fréquence intermédiaire est nulle. L'application de la réception homodyne aux radars à impulsions, à effet Doppler, de surveillance au sol, chargés de repérer des cibles de très faible vitesse radiale, suppose une capacité de traitement du signal reçu pratiquement homogène depuis le continu jusqu'à la demi-fréquence de récurrence du signal d'émission. En particulier, le traitement à probabilité de détection constante d'une surface équivalente radar donnée pouvant se déplacer à une vitesse radiale variable suppose l'invariance du rapport signal à bruit de la cible sur toute la largeur du spectre à analyser (surtout dans le cas où le traitement du signal reçu par le radar utilise un analyseur de spectre). Le bruit affectant le signal reçu se compose en particulier du bruit thermique du récepteur, qui ne dépend pratiquement pas de la fréquence dans la bande de fréquences considérée, et du bruit dû aux semiconducteurs utilisés dans les premiers étages du récepteur, ce dernier suivant une loi inversement proportionnelle à la fréquence (1/f) telle que ce bruit devient égal au bruit thermique du récepteur à une fréquence de quelques centaines de hertz et croît ensuite de 3 dB par octave descendante, selon une courbe asymptotique d'ordre 1 bien connue. Ce bruit en 1/f est d'autant plus gênant que l'on a coutume de travailler en radar avec un rapport signal à bruit proche de 0 dB. Un accroissement de bruit dans une gamme de fréquences donnée peut donc signifier la perte des échos dans cette gamme de fréquences.

Pour parvenir à ladite invariance du rapport signal à bruit, il faut éliminer le bruit en 1/f. Un simple filtrage de la zone de fréquences perturbée permet de se débarrasser du bruit, donc de ne pas causer d'élévation inacceptable du taux de fausses alarmes, mais on n'améliore pas le rapport signal à bruit dans cette zone de fréquences du fait que l'on atténue également le signal, et par conséquent on ne peut pas effectuer une analyse correcte du signal utile.

On connaît d'après le document US-A-3 332 077 un système radar faisant appel à une modulation de phase aléatoire ou pseudo-aléatoire de période égale à N fois la récurrence du signal radar, N étant beaucoup plus grand que 1, cette modulation servant à lever l'ambiguïté de distance.

La présente invention a pour objet un circuit simple à réaliser, qui permette, de façon simple et économique, de supprimer pratiquement tout le bruit basse fréquence survenant, dans un système émetteur-récepteur de radar homodyne, entre le début des étages amplificateurs de l'émetteur et les étages finaux d'amplification du récepteur.

Dans un système radar homodyne comportant un émetteur et un récepteur dans lequel l'émetteur émet un signal qui est une porteuse de fréquence Fo, éventuellement modulée et/ou codée, découpée à une fréquence de récurrence PRF par des créneaux de largeur to, l'invention prévoit que pour éliminer pratiquement tout ledit bruit basse fréquence, on dispose dans le circuit d'émission un dispositif codeur agissant, selon deux grandeurs complémentaires, sur le signal d'émission, ces deux grandeurs étant alternativement introduites à une fréquence inférieure ou égale à PRF/2, et de disposer dans le circuit de réception un dispositif décodeur agissant, de la même façon que le dispositif codeur, sur le signal de réception, et suivi d'un échantillonneur-bloqueur et d'un filtre passe-bas.

La présente invention a pour objet un système de radar homodyne suivant la revendication 1.

La présente invention sera mieux comprise à la lecture de la description détaillée d'un mode de réalisation pris comme exemple non limitatif, et illustré par le dessin annexé, sur lequel :

— la figure 1 est un bloc-diagramme dudit mode de réalisation, qui est ici un système radar Doppler à récepteur homodyne conforme à l'invention ;

— les figures 2 et 3 sont des diagrammes fréquentiels des spectres respectivement du signal émis et du signal reçu par un système radar Doppler à récepteur homodyne, de l'art antérieur, et

— les figures 4 à 6 sont des diagrammes fréquentiels des spectres respectivement du signal émis, du signal reçu et du signal décodé, dans le système radar de la figure 1.

L'invention sera expliquée ci-dessous en référence à un radar Doppler à récepteur homodyne, mais il est bien entendu qu'elle s'applique à d'autres systèmes émetteurs-récepteurs dans lesquels on cherche à éliminer un bruit d'extrémité de bande, à condition que ces systèmes émettent des signaux sous forme de créneaux réguliers découpant une porteuse, éventuellement modulée et/ou codée, comme par exemple des systèmes numériques de transmission de données.

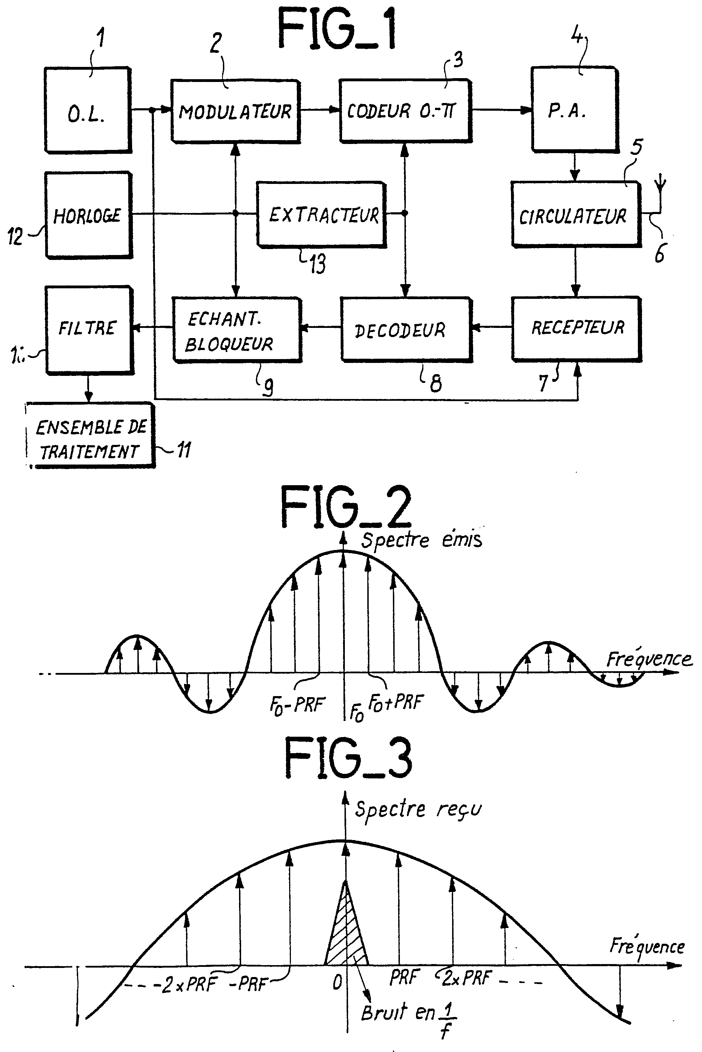

Le système radar Doppler, représenté sous forme de bloc-diagramme sur la figure 1, comporte un oscillateur local 1 attaquant le récepteur 7 et un modulateur 2 qui est relié, via un codeur 3, à un préamplificateur-amplificateur d'émission 4. La sortie de l'amplificateur 4 est reliée par un circulateur 5 à une antenne d'émission-réception 6. Les signaux reçus par l'antenne 6 passent par le circulateur 5 et arrivent à un récepteur homodyne 7. La sortie du récepteur 7 est reliée via un décodeur 8 à l'entrée d'un échantillonneur-bloqueur 9, dont la sortie est reliée, via un filtre passe-bas 10, à un ensemble de traitement 11.

Le système radar comporte également un circuit d'horloge 12, déterminant la fréquence de récurrence des impulsions d'émission radar (généralement désignée PRF), relié au modulateur 2 ainsi qu'à un circuit 13 extracteur de signal de synchronisation, et un circuit 9.

Les éléments 1, 2, 4, 5, 6, 7, 9, 11 et 12 sont ceux constituant habituellement un système radar Doppler classique, et ne seront donc pas décrits plus en détail. Les éléments nouveaux 3, 8, 10 et 13, qui font partie de l'invention, seront décrits ci-dessous.

Le codeur 3 est, dans le cas présent, un codeur de phase produisant un déphasage de 0° et 180°, alternativement, du signal de sortie du modulateur 2 et ce, pour les raisons exposées plus loin, au rythme de la demi-fréquence de l'horloge 12, c'est-à-dire PRF/2. De façon avantageuse, ce codeur est réalisé à l'aide d'un déphaseur à diode PIN, dont les détails de réalisation sont évidents pour l'homme de l'art.

Le décodeur 8 produit, comme le codeur 3, un déphasage de 0° et 180° alternativement du signal de sortie du récepteur 7. Selon un mode de réalisation de l'invention, ce décodeur 8 est un amplificateur vidéo-fréquence à gain programmable soit à + 1 soit à — 1. Le décodeur 8 est également commandé au rythme de PRF/2. Le filtre 10 est, dans le cas présent, un filtre passe-bas, qui est avantageusement réalisé, de façon connue en soi, à l'aide de filtres actifs à amplificateurs opérationnels. Le circuit extracteur 13 est, dans le cas présent, un simple diviseur par 2 de la fréquence d'horloge fournie par le circuit 12. Si la source de signaux d'horloge n'était pas accessible, par exemple dans le cas d'un récepteur éloigné de l'émetteur, il faudrait utiliser, pour synchroniser le décodeur 8, et, le cas échéant, le codeur 3, un circuit approprié de restitution de signal d'horloge dont la réalisation serait évidente pour l'homme de l'art.

On va maintenant expliquer le fonctionnement du dispositif décrit ci-dessus, d'abord sans le codeur 3 ni le décodeur 8, puis avec ces éléments.

Dans le cas classique où le signal émis par le radar est une porteuse de fréquence Fo découpée à la fréquence PRF par un créneau de largeur to, le spectre émis est, comme représenté sur la figure 2, un ensemble de raies équidistantes centré sur Fo, la distance entre raies adjacentes étant égale à PRF. L'enveloppe de ce spectre est une fonction de la forme sin x/x avec $x = \pi$ to $(f - Fo)$, f étant la fréquence.

Comme on le sait, ce signal d'émission, lorsqu'il est renvoyé par une cible mobile à une vitesse v, est transposé en fréquence d'une valeur $2 v/\lambda = 2 v Fo/C$, $\lambda$ étant la longueur d'onde d'émission et C la célérité de la lumière. Le spectre de l'écho renvoyé par une telle cible se déduit par simple translation du spectre de la figure 2, en ce qui concerne les abscisses des raies. Toutefois, pour la clarté des explications, on supposera que la cible est fixe, c'est-à-dire que v = 0. Le spectre de l'écho est donc alors semblable à celui du signal émis, aux amplitudes près.

A la réception, dans le cas d'un récepteur homodyne, le spectre est transposé de — Fo, ce qui introduit un bruit en 1/f. Le spectre de raies à la sortie du récepteur 7 a l'allure représentée sur la figure 3, centré sur une fréquence nulle, et ayant toujours une enveloppe de la forme sin x/x. Les raies sont toutes distantes de PRF, et le bruit en l/f est superposé à la raie centrale utile de fréquence nulle. A la sortie de l'échantillonneur-bloqueur 9, toutes les raies sont repliées à la fréquence nulle.

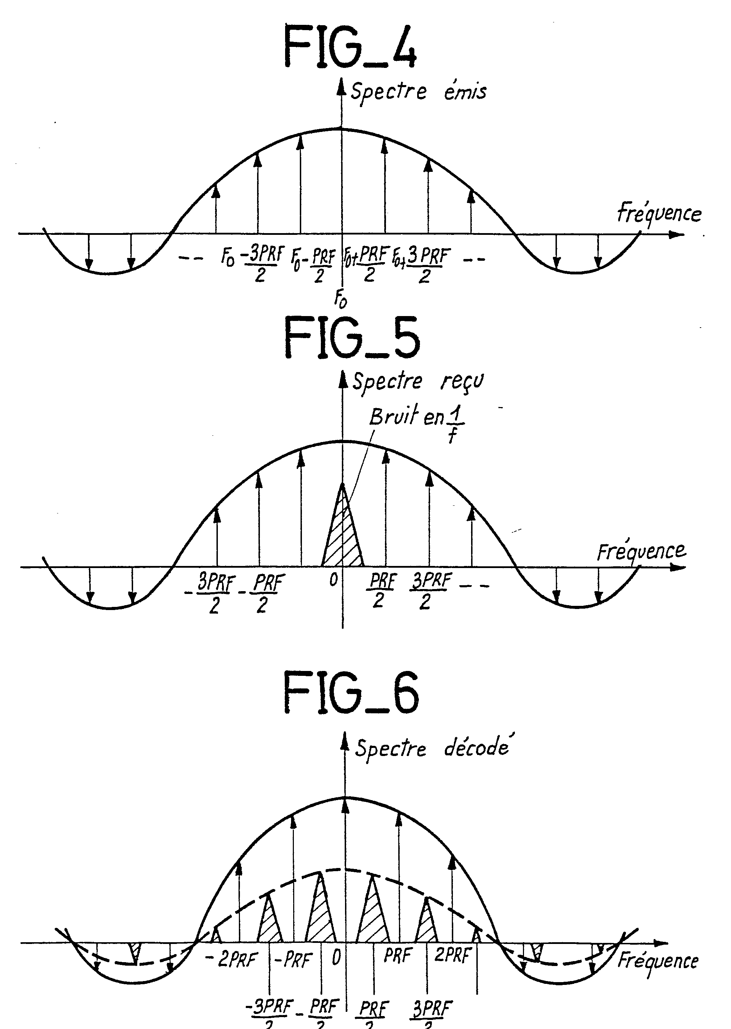

Avec le dispositif codeur de l'invention, qui, à l'émission, inverse la phase de la porteuse à chaque impulsion radar, le spectre du signal émis est tel que représenté sur la figure 4. Ce spectre est le résultat de la convolution du spectre de la figure 2 par le spectre fréquentiel résultant du dédoublement de chaque raie en une infinité de raies mutuellement distantes de PRF. En effet, l'action du codeur 3 est assimilable à une modulation d'amplitude à porteuse supprimée par mélange équilibré entre la porteuse et un signal rectangulaire de fréquence de récurrence égale à PRF/2. Le spectre de raies de la figure 4 est centré sur la fréquence Fo, les deux premières raies étant à Fo + PRF/2 et Fo — PRF/2. L'enveloppe de ce spectre est toujours la transformée de Fourier de l'impulsion ou créneau de largeur to de découpage de la porteuse Fo, c'est-à-dire de la forme sin x/x.

A la sortie du récepteur 7, on obtient un spectre de raies, représenté Fig. 5, semblable à celui du signal d'émission, centré sur la fréquence nulle mais avec du bruit en 1/f superposé à la raie de fréquence nulle. Le décodeur 8 ayant une action complémentaire de celle du codeur 3, le spectre à sa sortie est tel que celui représenté sur la figure 6. Ce spectre double est toujours centré sur une raie de fréquence nulle, et se compose d'une première série de raies de signal utile, comportant la raie de fréquence nulle, mutuellement distantes de PRF, et formant un spectre pratiquement identique à celui représenté sur la figure 3, et d'une seconde série de zones étroites de bruit, semblables à celle du bruit superposé à la raie de fréquence nulle du spectre à la sortie du récepteur 7, mais d'amplitudes plus faibles. Aucune zone de bruit n'est superposée à la raie centrale de fréquence nulle. Les deux zones de bruit les plus proches de cette raie centrale sont disposées symétriquement par rapport à cette dernière et centrées sur des fréquences PRF/2 et — PRF/2 respectivement. Les zones de bruits suivantes sont régulièrement situées à des intervalles égaux à PRF. L'enveloppe de cette série de zones de bruit est également de la forme sin x/x.

En ce qui concerne le signal utile, le spectre de la figure 6 est pratiquement identique à celui de la figure 3. Le codage conforme à l'invention est donc transparent aux signaux Doppler du radar, et il peut être compatible avec un système de codage propre aux radars classiques, tel qu'un codage de phase du type Barker à l'émission.

A la sortie de l'échantillonneur-bloqueur 9, fonctionnant à la fréquence PRF, on obtient une raie pure à la fréquence nulle, et un bruit en 1/F transposé de PRF/2. Cette composante de bruit est pratiquement éliminée par le filtre passe-bas 10. Ce filtre comporte avantageusement un circuit de filtrage type CAUER avec un zéro à PRF/2.

La qualité de la réjection de la composante de bruit, centrée sur la fréquence nulle à la sortie du circuit 9, repose essentiellement sur les performances de l'inverseur 8. En effet, supposons que le gain de cet inverseur soit $1 + \varepsilon$ ou $-1$, $\varepsilon$ représentant le gain différentiel de l'inverseur. Si Ao est l'amplitude de la composante de bruit en 1/f de fréquence nulle, on retrouve à la sortie de l'inverseur 8 une composante de bruit en 1/f, centrée sur la fréquence nulle, d'amplitude Ao. $\varepsilon/2$. Si on limite par exemple à 30 Hz la fréquence de coupure de l'indicateur MTI (« Moving Target Indicator » en anglais) passe-haut du radar, le bruit en 1/f sera de 10 dB supérieur au bruit thermique à cette fréquence. Pour faire disparaître le bruit en 1/f dans le bruit thermique à la sortie de l'inverseur 8, il suffit que le gain différentiel $\varepsilon$ soit inférieur à $-30$ dB. La densité totale de bruit à 30 Hz est alors de 0,1 dB supérieure à la densité de bruit thermique seule, ce que l'on peut estimer satisfaisant. En pratique, l'utilisation d'un inverseur programmable, tel qu'un commutateur en circuit intégré C-MOS de Motorola ou Analog Devices, équipé, de façon connue en soi, de résistances à 1 %, permet d'atteindre, pour l'atténuation du bruit en 1/f une valeur variant entre $-30$ et $-40$ dB.

Les performances du codeur 3 n'influent pas sur la réjection du bruit en 1/f, mais sur l'apparition des composantes Doppler de fréquences :

$$\ldots \frac{-3}{2} \text{PRF}, \quad \frac{-1}{2} \text{PRF}, \quad \frac{+1}{2} \text{PRF}, \quad \frac{+3}{2} \text{PRF}, \ldots$$

superposées aux composantes de bruit en 1/f à l'entrée de l'inverseur 8, et qui sont éliminées par le filtre 10. Toute l'énergie n'étant plus présente dans les raies utiles de fréquences multiples de PRF, il y a donc une légère atténuation du signal utile.

Si l'on représente par $\pi$ ou $\varepsilon$ la phase, exprimée en radians, de la porteuse à la sortie du codeur 3 par rapport à la porteuse de référence présente à l'entrée de ce codeur, le démodulateur de phase du récepteur délivre alors un niveau relatif d'écho fixe variant entre $-1$ et $\cos \varepsilon \simeq 1 - \varepsilon^2/2$. Le niveau moyen relatif de l'écho fixe à la sortie de l'inverseur 8 est donc alors $1 - \varepsilon^2/4$ et non plus 1. Si l'on tolère $\varepsilon^2/4 = 0,01$ (diminution de 0,1 dB du niveau des échos), on trouve $\varepsilon = 0,2$ radian, ce qui signifie que le codeur 3 peut introduire une erreur de phase d'environ 11,5 degrés d'angle par rapport aux angles réels programmés, qui ont pour valeurs 0 et $\pi$, sans dommage pour le traitement. En pratique, cette erreur ne dépasse jamais quelques degrés.

Le codeur de phase 3 peut également générer une modulation d'amplitude parasite de la porteuse, mais il est facile de s'en affranchir en le faisant suivre d'un étage écrêteur (non représenté).

## Revendications

1. Système radar homodyne comportant une horloge (12), un circuit d'émission d'un signal de porteuse à la fréquence Fo et un circuit de réception d'un signal d'écho, ledit circuit d'émission comprenant un oscillateur (1) de fréquence Fo, un circuit de découpage (2) de porteuse à une fréquence de récurrence PRF par des créneaux de largeur to et un dispositif codeur (3) du signal d'émission connecté en sortie du circuit de découpage (2), ledit circuit de réception comportant un récepteur (7), un dispositif décodeur (8) et un filtre passe-bas (10) en série, ledit système étant caractérisé en ce qu'il comporte en outre un circuit extracteur (13) pour fournir à partir du signal d'horloge (12) un signal de synchronisation constitué par deux grandeurs complémentaires alternativement introduites à une fréquence égale à la fréquence moitié de la fréquence PRF, ledit circuit extracteur étant connecté à la fois au dispositif codeur (3) et au dispositif décodeur (8) pour coder le signal d'émission, respectivement pour décoder le signal d'écho, au moyen du signal de synchronisation, un circuit amplificateur d'émission (4) connecté dans le circuit d'émission en aval du dispositif codeur (3) et un échantillonneur-bloqueur (9) connecté dans le circuit de réception entre le dispositif décodeur (8) et le filtre passe-bas (10) de telle sorte que les bruits basse-fréquence survenant entre l'entrée du circuit amplificateur (4) et la sortie du récepteur (7) soient éliminés.

2. Système selon la revendication 1, caractérisé par le fait que le dispositif codeur (3) et le dispositif décodeur (8) comportent chacun un codeur de phase, déphasant alternativement de 0 et $\pi$ le signal d'émission et le signal d'écho, respectivement.

3. Système selon la revendication 2, appliqué à un radar de type Doppler, caractérisé par le fait que le dispositif codeur (3) est constitué par un déphaseur à diode PIN, et que le dispositif décodeur (8) est constitué par un amplificateur vidéo-fréquence à gain programmable entre $+ 1$ et $- 1$.

## Claims

1. A homodyne radar system comprising a clock (12), a carrier signal transmit circuit of the frequency Fo, and an echo signal receive circuit, said transmit circuit including an oscillator (1) of the frequency Fo, a chopper circuit (2) cutting the carrier into slots of a width to and a repetition frequency PRF, and a transmit signal encoding device (3) output-connected to the chopper circuit (2), said receive circuit comprising in series connection a receiver (7), a decoder device (8) and a low-pass filter (10), characterized in that it further includes an extractor circuit (13) for providing a synchronizing signal from a clock signal (12), the synchronization signal being constituted by two complementary quantities alternatively introduced at a frequency equal to half of the PRF frequency, said extractor circuit being connected both to the encoding device (3) and to the decoder device (8) for encoding the transmission signal, respectively for decoding the echo signal by means of the synchronization signal, and that a transmission amplifier circuit (4) is included in the transmit circuit downstream of the encoding device (3) and a sample-and-hold circuit (9) is inserted in the receive circuit between the decoder device (8) and the low-pass filter (10), in such a manner as to eliminate the low-frequency noise occurring between the input of the amplifier circuit (4) and the output of the receiver (7).

2. A system according to claim 1, characterized in that the encoding device (3) and the decoder device (8) each comprise a phase encoder adapted to shift in phase respectively the transmit signal and the echo signal alternatively by 0 and $\pi$.

3. A system according to claim 2, applied to a Doppler type radar, characterized in that the encoding device (3) is constituted by a PIN-diode phase shifter and that the decoder device (8) is constituted by a video-frequency amplifier having a programmable gain ranging from $+ 1$ to $- 1$.


**Patentansprüche**

1. Homodyn-Radarsystem mit einem Taktgeber (12), einem Sendekreis für ein Trägersignal der Frequenz Fo und mit einem Empfangskreis für ein Echosignal, wobei der Sendekreis einen Oszillator (1) der Frequenz Fo, einen Zerhackerkreis (2) zum Zerhacken des Trägersignals durch Impulse einer Folgefrequenz PRF und einer Breite to und eine Kodiervorrichtung (3) zum Kodieren des Sendesignals aufweist, die an den Ausgang des Zerhackerkreises (2) angeschlossen ist und wobei der Empfangskreis in Reihe einen Empfänger (7), eine Dekodiervorrichtung (8) und ein Tiefpaßfilter (10) aufweist, dadurch gekennzeichnet, daß das System weiter einen Extraktionskreis (13) besitzt, um ausgehend vom Taktsignal (12) ein aus zwei komplementären Größen, die alternativ mit einer der halben Frequenz der Folgefrequenz PRF entsprechenden Frequenz eingeführt werden, gebildetes Synchronisationssignal zu liefern, wobei der Extraktionskreis zugleich an die Kodiervorrichtung (3) zum Verschlüsseln des Sendesignals und an die Dekodiervorrichtung (8) zum Entschlüsseln des Echosignals mit Hilfe des Synchronisationssignals angeschlossen ist, und wobei ein Sendeverstärkerkreis (4) im Sendekreis hinter der Kodiervorrichtung (3) angeschlossen ist und ein Tast- und Haltekreis (9) im Empfangskreis zwischen der Dekodiervorrichtung (8) und dem Tiefpaßfilter (10) eingeschaltet ist, derart, daß die niederfrequenten Rauschsignale, die zwischen dem Eingang des Verstärkerkreises (4) und dem Ausgang des Empfängers (7) auftretenden, beseitigt werden.

2. System nach Anspruch 1, dadurch gekennzeichnet, daß die Kodiervorrichtung (3) und die Dekodiervorrichtung (8) jeweils einen Phasenkodierer besitzen, der abwechselnd das Sendesignal und das Echosignal in der Phase um 0 and $\pi$ verschiebt.

3. System nach Anspruch 2, angewendet auf ein Doppler-Radar, dadurch gekennzeichnet, daß die Kodiervorrichtung (3) aus einem PIN-Diodenphasenschieber und die Dekodiervorrichtung (8) aus einem Videofrequenzverstärker mit zwischen $+ 1$ und $- 1$ programmierbarer Verstärkung besteht.

# FIG_1

# FIG_2

Spectre émis

$F_0 - PRF$  |  $F_0$  $F_0 + PRF$  Fréquence

# FIG_3

Spectre reçu

$-2 \times PRF$  $-PRF$  0  $PRF$  $2 \times PRF$  Fréquence

Bruit en $\dfrac{1}{f}$

# FIG_4

Spectre émis

Fréquence

$F_0 -\dfrac{3PRF}{2}$  $F_0-\dfrac{PRF}{2}$  $F_0+\dfrac{PRF}{2}$  $F_0+\dfrac{3PRF}{2}$

$F_0$

# FIG_5

Spectre reçu

Bruit en $\dfrac{1}{f}$

Fréquence

$-\dfrac{3PRF}{2}$  $-\dfrac{PRF}{2}$  $0$  $\dfrac{PRF}{2}$  $\dfrac{3PRF}{2}$

# FIG_6

Spectre décodé

$-2PRF$  $-PRF$  $0$  $PRF$  $2PRF$  Fréquence

$-\dfrac{3PRF}{2}$  $-\dfrac{PRF}{2}$  $\dfrac{PRF}{2}$  $\dfrac{3PRF}{2}$